# EUROPEAN PATENT APPLICATION

(11) **EP 1 333 616 A2**
(43) Date of publication of application: **06.08.2003**
(21) Application number: 02028780.1
(22) Date of filing: 23.12.2002
(51) Int. Cl.: H04L 12/28

(54) **Cable modem and protocol conversion processing method**

(30) Priority: 28.12.2001 JP 2001401102
(71) Applicant: Kabushiki Kaisha Toshiba, Tokyo 105-8001 (JP)
(72) Inventor: Fukada, Takashi, Intel.Prop.Div., K.K. Toshiba, Tokyo 105-8001 (JP)
(74) Representative: HOFFMANN - EITLE

(57) **Abstract**

A cable modem (10) with a function of packetizing voice information and transmitting/receiving the packetized voice information includes an interface for connection to an ISDN (Integrated Services Digital Network) telephone, a connection control unit (52) which executes a connection control for the ISDN telephone connected via the interface, and a VoIP control unit (50) which executes a VoIP-related protocol process for a voice call by the ISDN telephone that is connection-controlled by the connection control unit.

## Description

The present invention relates to a cable modem having a VoIP (Voice over Internet Protocol) function, which, when used, is connected to a (Cable Television) network, etc.

In these years, attention has been paid to IP telephones using VoIP (Voice over Internet Protocol) technology, that is, technology for transmitting/receiving voice data using an IP (Internet Protocol) network such as the Internet. Now, standardization of VoIP using a CATV network as infrastructure is in progress. The IP telephone is connected in use to a CATV network via a cable modem having functions of packetizing voice data and transmitting/receiving the packetized voice.

Conventional cable modems are designed for analog telephones. Such cable modems cannot be used for ISDN telephones for ISDN (Integrated Services Digital Network) that is prevalent in Japan and Europe. Under the circumstances, users who are currently make use of ISDN telephones have to purchase analog telephones in order to enjoy VoIP services (IP telephones).

Since conventional cable modems are designed for analog telephones, VoIP services cannot be enjoyed by currently used ISDN telephones in regions where ISDN telephones are widely used.

The object of the present invention is to provide a cable modem which is equipped with an interface for ISDN telephones and is applicable to ISDN telephones, thus enjoying VoIP services with use of currently prevalent ISDN telephones.

According to an aspect of the present invention, there is provided a cable modem with a function of packetizing voice information and transmitting/receiving the packetized voice information, comprising: an interface for connection to an ISDN (Integrated Services Digital Network) telephone; a connection control unit which executes a connection control for the ISDN telephone connected via the interface; and a VoIP control unit which executes a VoIP-related protocol process for a voice call by the ISDN telephone that is connection-controlled by the connection control unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a VoIP system structure in which a cable modem 10 according to an embodiment of the invention is used;
FIG. 2 is a block diagram showing a detailed structure of the cable modem 10 applicable to VoIP, as shown in FIG. 1;
FIG. 3 illustrates a basic calling/disconnection sequence of the ISDN telephones 10 (calling side and called side) through an ISDN exchange;
FIG. 4 shows an example of ISDN/VoIP protocol conversion for the purpose of explaining the operations of an ISDN terminal unit 52 and a VoIP control unit 50 in the cable modem 10;
FIG. 5 shows an example of ISDN/VoIP protocol conversion for the purpose of explaining the operations of the ISDN terminal unit 52 and VoIP control unit 50 in the cable modem 10;
FIG. 6 illustrates a call setting/disconnection sequence between the cable modem 10 and a call agent 30; and
FIG. 7 illustrates a call setting/disconnection sequence between the cable modem 10 and call agent 30.

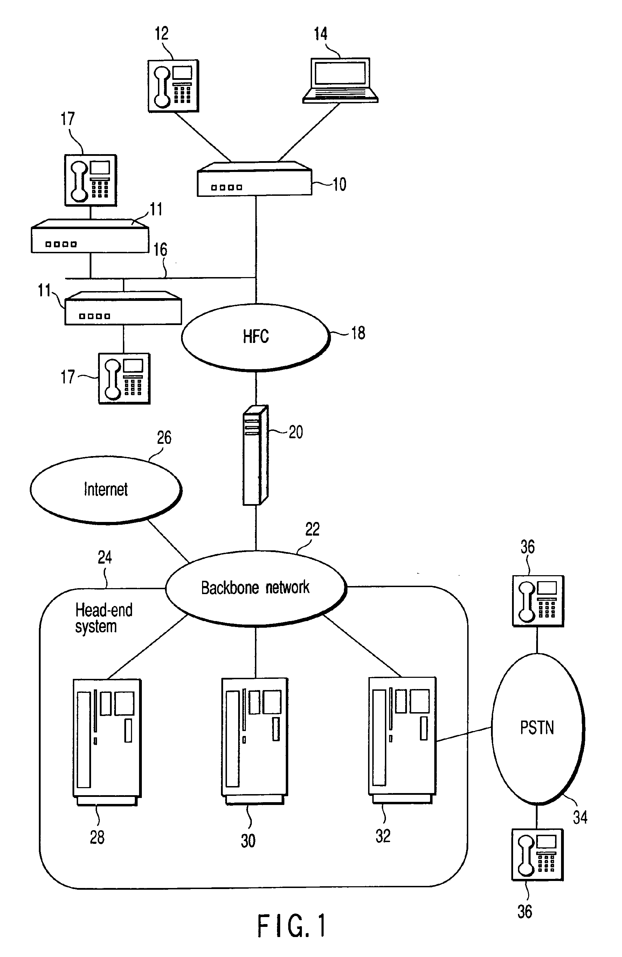

An embodiment of the present invention will now be described with reference to the accompanying drawings. FIG. 1 is a block diagram showing a VoIP system structure in which a cable modem 10 according to an embodiment of the invention is used.

The cable modem 10 is set in, e.g. a home and is used there. The cable modem 10 is used to make use of data services and telephone services based on VoIP techniques. The cable modem 10 has a function of packetizing voice data by VoIP techniques and transmitting/receiving packetized voice (hereinafter called "VoIP function"). The cable modem 10 is equipped with an ISDN telephone interface for connection to an ISDN telephone 12 and a network interface for connection to a personal computer 14.
The cable modem 10 is also provided with a CATV (Cable Television) network interface for connection to a CATV network 16. The cable modem 10 is connected to another ISDN telephone 17 via the CATV network 16 and another cable modem 11. The CATV network 16 is connected to a CMTS (Cable Modem Termination System) 20 via an HFC (Hybrid Fiber Coaxial) 18. The CMTS 20 is a head-end modem on a head-end system 24 side.

The CMTS 20 is connected to the head-end system 24 and Internet 26 via a backbone network 22.

The head-end system 24 includes a server 28, a call agent 30 and a PSTN gateway 32. The server 28 performs a control for providing data services. The server 28 executes communication controls based on various protocols (e.g. DHCP (Dynamic Host Configuration Protocol), TFTP (Trivial File Transfer Protocol) and SNMP (Simple Network Management Protocol)).

The call agent 30 controls the cable modem 10. The call agent 30 has a function of executing a signaling process such as establishment/release of a call channel between the cable modems or between the cable modem 10 and PSTN gateway 32.

The PSTN gateway 32 controls transmission/reception of signals between a public switched telephone network (PSTN) 34 and a digital network. The PSTN gateway 32 performs protocol conversion for packet exchange and network exchange when a call is made between the ISDN telephone in the CATV network 16 and a telephone 36 in the PSTN 34. Specifically, the PSTN gateway 32 converts an analog voice signal from the PSTN 34 to voice data, and converts voice data from the digital network to an analog voice signal.

A telephone number is set in the ISDN telephone 12, 17 connected to the cable modem 10, 11. An IP address is preset in the cable modem 10, 11. If a telephone number of a call destination is dialed from the ISDN telephone 12, the cable modem 10 tells the dial number to the call agent 30. Based on the dial number told from cable modem 10, the call agent 30 determines whether the call destination is the cable modem 11 or PSTN gateway 32. The call agent 30 tells the IP address of the cable modem 11 or PSTN gateway 32 at the call destination point to the cable modem 11 at the call originating point. The cable modem 10 at the call originating point directly establishes a call with the IP address of the call destination point told from the call agent 30, so that voice packets based on VoIP can flow. Thus, the call-enabled state is set.

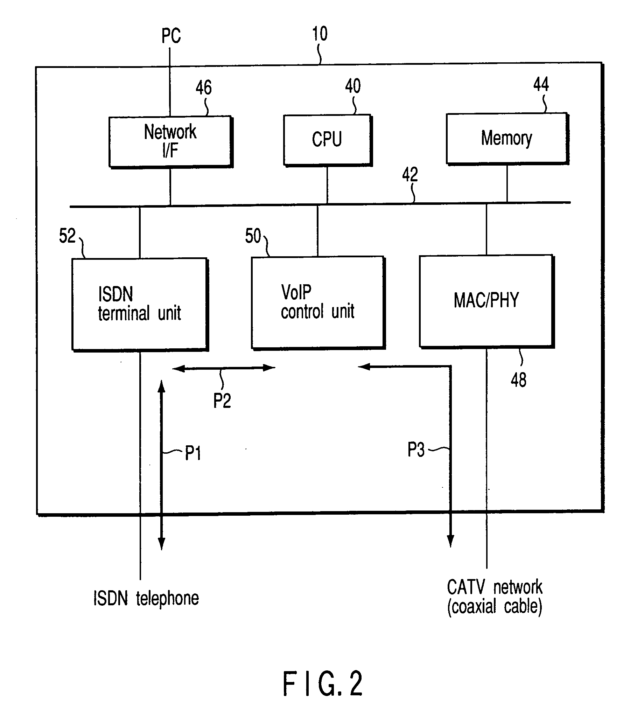

FIG. 2 is a block diagram showing a detailed structure of the cable modem 10 having the VoIP function, as shown in FIG. 1. As is shown in FIG. 2, the cable modem 10 is connected to a memory 44, a network interface (I/F) 46, an MAC (Media Access Control)/PHY (Physical Layer Protocol) unit 48, a VoIP control unit and an ISDN terminal unit 52 over a bus 42. The cable modem 10 is connected to the personal computer 14 via the network I/F 46. The cable modem 10 is connected to the ISDN telephone 12 via the ISDN terminal unit 52. In addition, the cable modem 10 is connected to the CATV network (coaxial cable) 16 via the MAC/PHY unit 48.

The CPU 40 controls the respective parts of the cable modem 10 according to programs stored in the memory 44. The memory 44 stores various data as well as the programs to be executed by the CPU 40. The network interface (I/F) 46 is an interface circuit for connecting the personal computer 14, which has a predetermined network interface of, e.g. a local area network (LAN), to the cable modem 10.

The MAC/PHY unit 48 is an RF (Radio Frequency) interface circuit for connection to the CATV network 16. The MAC/PHY unit 48 comprises a MAC (Media Access Control) controller, a PHY (Physical) controller, a tuner, etc. The MAC/PHY unit 48 is provided with an interface for connection to a coaxial cable.

The VoIP control unit 50 executes, under control of CPU 40, VoIP-related protocol processes in the cable modem 10.

The ISDN terminal unit 52 executes, under control of CPU 40, a connection control for the ISDN telephone 12 and an interface control for the VoIP control unit 50. The ISDN terminal unit 52 is equipped with an ISDN telephone interface (S/T point interface) for connection to the ISDN telephone 12. The ISDN terminal unit 52 emulates an ISDN exchange interface for a connection control of the ISDN telephone 12. Since the ISDN terminal unit 52 emulates the ISDN exchange interface, the ISDN telephone 12 that is connected to the cable modem 10 can operate as if it were connected to the ISDN exchange.

The VoIP control unit 50 comprises, e.g. a DSP (Digital Signal Processor). The ISDN terminal unit 52 comprises, e.g. an integrated circuit called "ISDN S/T Interface Transceiver" (manufactured by Motorola, with model No. MC145574A).

In the present embodiment, each of the VoIP control unit 50 and ISDN terminal unit 52 may be configured to have functions for an executing protocol conversion process to be described below. Alternatively, protocol conversion process programs may be stored in the memory 44, and the CPU 40 may control the VoIP control unit 50 and ISDN terminal unit 52 to execute the protocol conversion process (to be described below) according to the protocol conversion process programs.

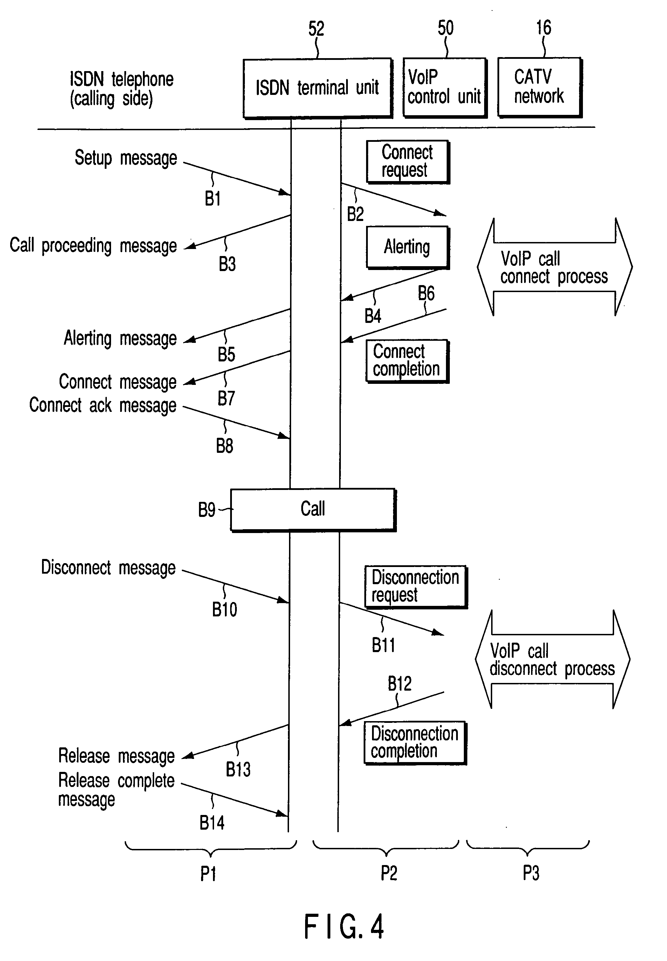

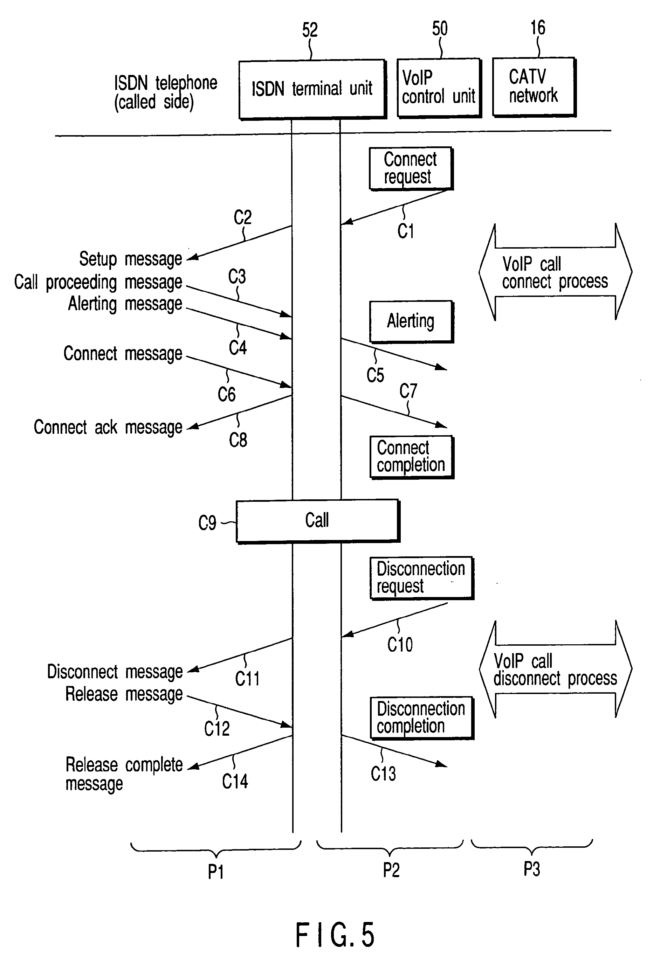

A detailed description will be given later with respect to a protocol conversion process P1 with the ISDN telephone via the ISDN terminal unit 52, a protocol conversion process P2 between the ISDN terminal unit 52 and VoIP control unit 50, and a protocol conversion process P3 between the VoIP control unit 50 and external network (FIGS. 4 and 5).

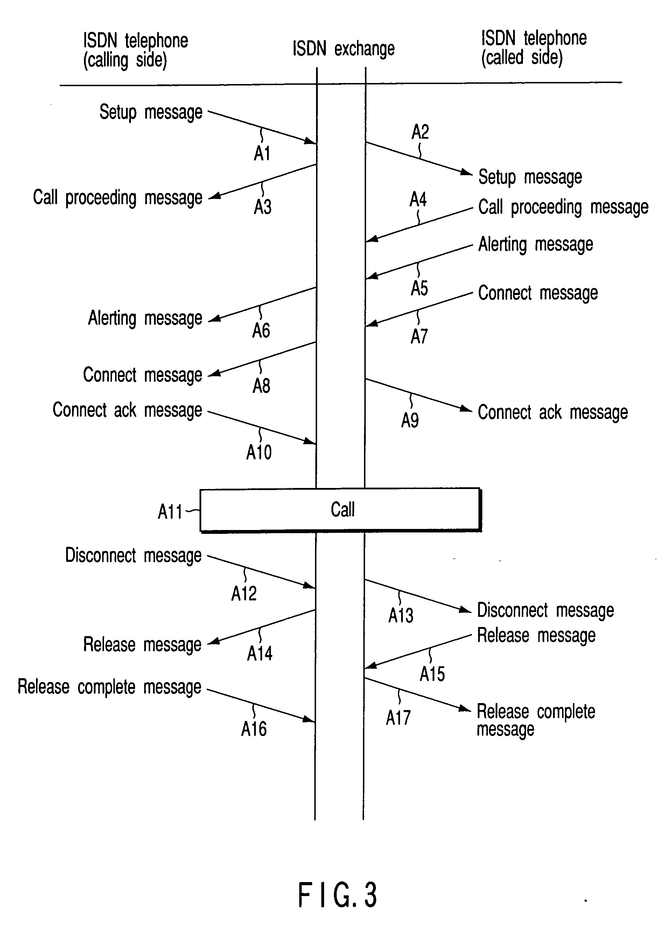

Referring now to FIG. 3, a description will be given of a basic calling/disconnection sequence of ISDN telephones 10 (calling side and called side) through the ISDN exchange.

The calling-side telephone is taken off the hook and dialed. Thus, the calling-side telephone sends a call setup (SETUP) message A1 to the ISDN network exchange (hereinafter referred to as "exchange"). Upon receiving the SETUP message A1, the exchange returns a call setup acceptance (CALL PROCEEDING) message A3 to the calling-side telephone and sends a SETUP message A2 to the called-side telephone.

In response to the SETUP message A2, the called-side telephone returns a CALL PROCEEDING message A4 and then a calling (ALERTING) message A5. Upon receiving the ALERTING MESSAGE A5 from the called-side telephone, the exchange sends an ALERTING message A6 to the calling-side telephone. If the called-side telephone is taken off the hook, it sends a connection (CONNECT) message A7 to the exchange. The exchange returns a connection acknowledgement (CONNECT ACK) message A9 to the called-side telephone and sends a CONNECT message A8 to the calling-side telephone. Upon receiving the CONNECT message A8, the calling-side telephone sends a CONNECT ACK message A10.

Upon completion of the above sequence, a call-enabled state A11 is reached, and a call is enabled between the calling-side telephone and the called-side telephone.

After the phone conversation is finished, a disconnection sequence is performed to disconnect the call. FIG. 3 illustrates the disconnection sequence activated from the calling-side telephone. It is also possible that the disconnection sequence is activated from the called-side telephone.

If the calling-side telephone is set on the hook, it sends a disconnection (DISCONNECT) message A12 to the exchange. Upon receiving the DISCONNECT message A12, the exchange sends a DISCONNECT message A13 to the called-side telephone and returns a release (RELEASE) message A14 to the calling-side telephone. In response to the RELEASE message A14, the calling-side telephone returns a release completion (RELEASE COMPLETE) message A16 to complete the disconnection process. On the other hand, the called-side telephone, which has received the DISCONNECT message A12, returns a RELEASE message A15 to the exchange. Upon receiving the RELEASE message A15, the exchange sends a RELEASE COMPLETE message A17 to the called-side telephone and completes the disconnection process on the call-reception side.

The operations of the ISDN terminal unit 52 and VoIP control unit 50 in the cable modem 10 will now be described with reference to FIGS. 4 and 5 illustrating examples of ISDN/VoIP protocol conversion. The ISDN terminal unit 52 emulates the ISDN exchange interface, as will be described below. Specifically, the ISDN terminal unit 52 executes a process for the ISDN telephone 12, which is equivalent to the operation of the ISDN exchange.

FIG. 4 illustrates an example of protocol conversion in the case of activating a calling/disconnection sequence from the ISDN telephone 12 side.

When the ISDN telephone 12 is taken off the hook and dialed to start a calling process, the ISDN terminal unit 52 receives a call setup (SETUP) message B1 from the ISDN telephone 12. Upon receiving the SETUP message B1 from the ISDN telephone 12, the ISDN terminal unit 52 returns a call setup acceptance (CALL PROCEEDING) message B3 to the ISDN telephone 12 and issues a connect request B2 to the VoIP control unit 50.

The VoIP control unit 50 starts a VoIP protocol process (VoIP call connect process) for the CATV network 16. If the VoIP control unit 50 is informed from the CATV network 16 that the called-side telephone is being called, the VoIP control unit 50 sends a calling (ALERTING) message B4 to the ISDN terminal unit 52. Responding to the ALERTING message B4 from the VoIP control unit 50, the ISDN terminal unit 52 sends an ALERTING message B5 to the ISDN telephone 12, thus informing the ISDN telephone 12 that the called-side telephone is being called.

When the VoIP control unit 50 is informed from the CATV network 16 that the called-side telephone has been taken off the hook and set in the call-enabled state, the VoIP control unit 50 tells a connect completion B6 to the ISDN terminal unit 52. Upon receiving the connect completion B6, the ISDN terminal unit 52 sends a connection (CONNECT) message B7 to the ISDN telephone 12. Then, if the ISDN terminal unit 52 receives a connection acknowledge (CONNECT ACK) message B8 returned from the ISDN telephone 12 in response to the CONNECT message B7, a call-enabled state B9 is set between the ISDN telephone 12 and the telephone at the other end.

After the phone conversation is finished, a disconnection sequence is performed to disconnect the call in the following manner.

If the ISDN telephone 12 is set on the hook to start a disconnection process, the ISDN terminal unit 52 receives a disconnection (DISCONNECT) message B10 from the ISDN telephone 12. The ISDN terminal unit 52 tells a disconnection request B11 to the VoIP control unit 50. Upon receiving the disconnection request B11, the VoIP control unit 50 executes a VoIP protocol process (VoIP call disconnect process) for the CATV network 16. Then, if the call has successfully been disconnected, the VoIP control unit 50 informs the ISDN terminal unit 52 of disconnect completion B12. Upon receiving the notice of the disconnect completion B12, the ISDN terminal unit 52 sends a release (RELEASE) message B13 to the ISDN telephone 12. Then, the ISDN terminal unit 52 receives a release completion (RELEASE COMPLETE) message from the ISDN telephone 12 and completes the disconnection sequence.

FIG. 5 illustrates an example of protocol conversion in the case of activating a calling/disconnection sequence from the telephone 36 in the PSTN 34.

If the telephone 36 in the PSTN 34 is taken off the hook and dialed to start a calling process, a connect request from the telephone 36 is reported to the cable modem 10 via the CATV network 16. The cable modem 10 receives the connect request via the MAC/PHY unit 48 and tells it to the VoIP control unit 50. Upon receiving the connect request from the CATV network 16, the VoIP control unit 50 sends a connect request C1 to the ISDN terminal unit 52. Upon receiving the connect request C1, the ISDN terminal unit 52 sends a call setup (SETUP) message C2 to the ISDN telephone 12. In response to the SETUP message C2, the ISDN telephone 12 transmits a call setup acceptance (CALL PROCEEDING) message C3 to the ISDN terminal unit 52. Subsequently, the ISDN telephone 12 sends a calling (ALERTING) message C4 to the ISDN terminal unit 52. Upon receiving the ALERTING message C4, the ISDN terminal unit 52 tells an alerting state C5 to the VoIP control unit 50. Then, the VoIP control unit 50 tells the alerting state to the CATV network (telephone 36). If the ISDN telephone 12 is taken off the hook, a connection (CONNECT) message C6 is sent to the ISDN terminal unit 52. The ISDN terminal unit 52 returns a connection acknowledgement (CONNECT ACK) message C8 to the ISDN telephone 12 and sends tells connect completion C7 to the VoIP control unit 50. Responding to the connect completion C7 from the ISDN terminal unit 52, the VoIP control unit 50 reports the connect completion to the CATV network 16. The ISDN terminal unit 52 sets a call-enabled state C9 between the ISDN telephone 12 and telephone 36.

After the phone conversation is finished, a disconnection sequence is performed to disconnect the call in the following manner.

The telephone 36 in the PSTN 34 is set on the hook to start a disconnection sequence. The on-hook state of the telephone 36 in PSTN 34 is told to the VoIP control unit 50. Responding to the notice of the on-hook state, the VoIP control unit 50 tells a disconnect request C10 to the ISDN terminal unit 52. In response to the disconnect request C10, the ISDN terminal unit 52 sends a disconnection (DISCONNECT) message C11 to the ISDN telephone 12. Responding to the DISCONNECT message C11, the ISDN telephone 12 returns a release (RELEASE) message C12 to the ISDN terminal unit 52. Upon receiving the RELEASE message C12, the ISDN terminal unit 52 returns a release completion (RELEASE COMPLETE) message C14 to the ISDN telephone 12 and tells disconnect completion C13 to the VoIP control unit 50. Upon receiving the disconnect completion C13, the VoIP control unit 50 tells the disconnection completion to the CATV network 16.
Thus, the disconnection sequence is completed.

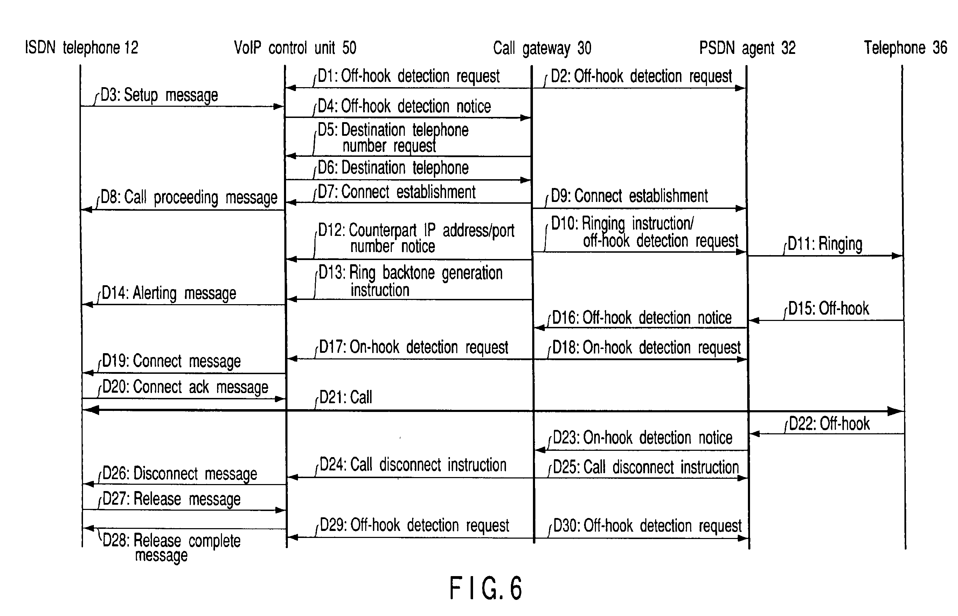

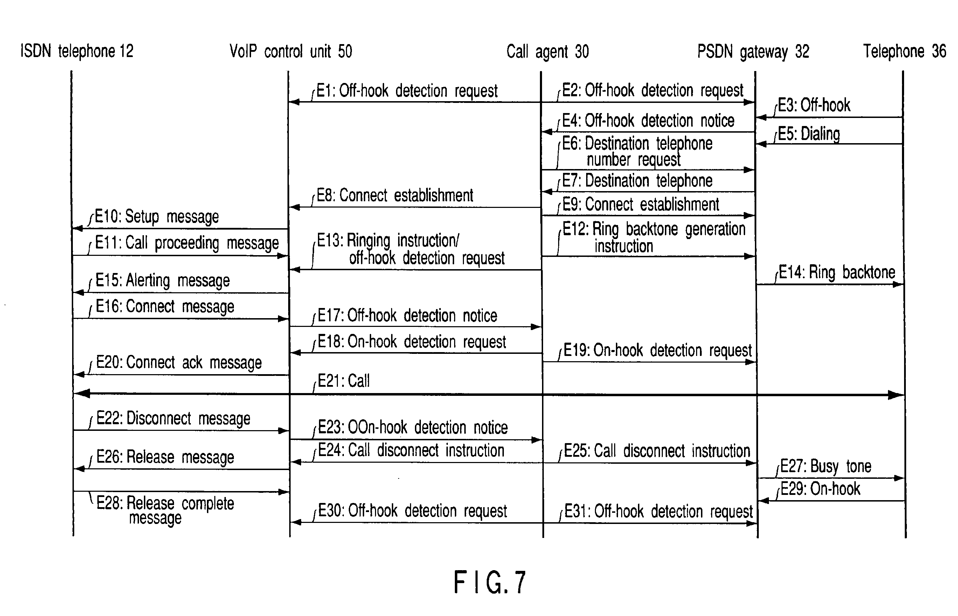

A call setup/disconnection sequence between the cable modem 10 and call agent 30 will now be described referring to FIGS. 6 and 7.

A protocol for ISDN is used between the ISDN telephone 12 and cable modem 10. SGCP (Simple Gateway Control Protocol)/MGCP (Media Gateway Control Protocol) (hereinafter "SGCP/MGCP" is referred to as "XGPC"), for example, is used between the cable modem 10 and call agent 30. The VoIP control unit 50 executes protocol conversion between the protocol for ISDN and SGCP/MGCP.

FIG. 6 illustrates an example of protocol conversion in a case where a call setup process is activated by the ISDN telephone 12 and a call disconnection process is activated by the telephone 36 in the PSTN 34.

The call agent 30 issues off-hook detection requests (Notification Requests) D1 and D2 to the cable modem 10 and PSTN gateway 32, and instructs the cable modem 10 and PSTN gateway 32 to report a detected off-hook state. If the cable modem 10 receives a calling (SETUP) message D3 from the ISDN telephone 12, it sends an off-hook detection notice (Notify (off-hook)) D4 to the call agent 30 to report the off-hook detection.

The call agent 30 issues a destination telephone number request (Notification Request) D5 to the cable modem 10 in order to request a destination telephone number. The cable modem 10 informs the call agent 30 of a destination telephone number (Notify (digits)) D6, which has already been acquired by the SETUP message D3.

In order to establish connection between the cable modem 10 and PSTN gateway 32, the call agent 30 issues connection establishment requests (Create Connection) D7 and D9 to the cable modem 10 and PSTN gateway 32. The calling agent 30 issues to the PSTN gateway 32 a destination telephone ringing instruction/destination telephone off-hook notice instruction (Notification Request) D10. The call agent 30 issues a destination IP address and PORT number (Modify Connection) D12 to the cable modem 10. In addition, the call agent 30 issues to the cable modem 10 a ring-back tone generation instruction (Notification Request) D13 to generate a ring-back tone. Upon receiving the Notification Request D13, the cable modem 10 sends a calling (ALERTING) message D14 to the ISDN telephone 12.

If the PSTN gateway 32 is informed from the telephone 36 of PSTN 34 of the off-hook state of the telephone 36, the PSTN gateway 32 issues an off-hook detection notice (Notify (off-hook)). The call agent 30 sends on-hook detection requests(Notification Request) D17 and D18 to the cable modem 10 and PSTN gateway 32 and instructs them to report a detected on-hook state. Upon receiving the Notification Request D17, the cable modem 10 sends a connection (CONNECT) message D19 to the ISDN telephone 12. Responding to the CONNECT message D19, the ISDN telephone 12 sends a connection acknowledgement (CONNECT ACK) message D20 to the cable modem 10. Thereafter, a call D21 between the ISDN telephone 12 and PSTN 34 is enabled.

After the phone conversation is finished, a disconnection sequence is performed to disconnect the call in the following manner.

When the PSTN gateway 32 has detected an on-hook state D22 of the telephone 36 in PSTN 34, the PSTN gateway 32 informs the call agent 30 of an on-hook detection notice (Notify (on-hook)). Upon receiving the Notify (on-hook), the call agent 30 issues call disconnection instructions (Delete Connection) D24 and D25 to the cable modem 10 and PSTN gateway 32. The cable modem 10 sends a disconnection (DISCONNECT) message D26 to the ISDN telephone 12, thereby starting a disconnection process. The ISDN telephone 12 sends a release (RELEASE) message D27 to the cable modem 10, thereby notifying the cable modem 10 of a channel release request. The cable modem 10 informs the ISDN telephone 12 of the release of the call by a release completion (RELEASE COMPLETE) message. Then, as described in connection with the initial stage of the call setup sequence, the call agent 30 issues off-hook detection requests (Notification Request) D29 and D30 to the cable modem 10 and PSTN gateway 32 and instructs them to report an off-hook state. If the off-hook state is detected, the call setup process is started.

FIG. 7 illustrates an example of protocol conversion in a case where a call setup process is activated by the telephone 36 in the PSTN 34 and a call disconnection process is activated by the ISDN telephone 12.

The call agent 30 issues off-hook detection requests (Notification Requests) E1 and E2 to the cable modem 10 and PSTN gateway 32, and instructs the cable modem 10 and PSTN gateway 32 to report a detected off-hook state. If the PSTN gateway 32 detects off-hook E3 of the telephone 36 in PSTN 34, it sends an off-hook detection notice (Notify (off-hook)) E4 to the call agent 30 to report the off-hook detection. The call agent 30 The call agent 30 issues a destination telephone number request (Notification Request) E6 to the PSTN gateway 32 in order to request a destination telephone number. The PSTN gateway 32 informs the call agent 30 of a destination telephone number (Notify (digits)) E7, which has already been acquired from the telephone 36 by dialing E5. In order to establish connection between the cable modem 10 and PSTN gateway 32, the call agent 30 issues connection establishment requests (Create Connection) E8 and E9 to the cable modem 10 and PSTN gateway 32. The cable modem 10 sends a call setup (SETUP) message E10 to the ISDN telephone 12. In response to the SETUP message E10, the ISDN telephone 12 sends a call setup acceptance (CALL PROCEEDING) message E11 to the cable modem 10. In addition, the call agent 30 issues to the PSTN gateway 32 a ring-back tone generation instruction (Notification Request) E12 to generate a ring-back tone. The calling agent 30 issues to the cable modem 10 a ringing instruction for ISDN telephone 12 and notice instruction of off-hook of ISDN telephone 12 (Notification Request) E13. Upon receiving the Notification Request E13, the cable modem 10 sends a calling (ALERTING) message E15 to the ISDN telephone 12. If the cable modem 10 is notified of the off-hook state by a connection (CONNECT) message E16 from the ISDN telephone 12, it sends an off-hook detection notice (Notify (off-hook)) E17 to the call agent 30. The call agent 30 sends on-hook detection requests (Notification Request) E18 and E19 to the cable modem 10 and PSTN gateway 32 and instructs them to report a detected on-hook state. Upon receiving the Notification Request E18, the cable modem 10 sends a connection acknowledgement (CONNECT ACK) message E20 to the ISDN telephone 12. Thereafter, a call E21 between the ISDN telephone 12 and the telephone 36 in PSTN 34 is enabled.

After the phone conversation is finished, a disconnection sequence is performed to disconnect the call in the following manner.

If the cable modem 10 detects an on-hook state on the basis of a disconnection (DISCONNECT) message E22 from the ISDN telephone 12, it sends an on-hook detection notice (Notify (on-hook)) E23 to the call agent 30. Upon receiving the Notify (on-hook) E23, the call agent 30 issues call disconnection instructions (Delete Connection) E24 and E25 to the cable modem 10 and PSTN gateway 32. The cable modem 10 sends a release (RELEASE) message E26 to the ISDN telephone 12, thereby starting a disconnection process. The ISDN telephone 12 sends a release completion (RELEASE COMPLETE) message E28 to the cable modem 10, thus notifying the cable modem 10 of the release completion of the call. On the other hand, the PSTN gateway 32 sends a busy tone E27 to the telephone 36 in PSTN 34. Upon receiving the busy tone E27, the telephone 36 in PSTN 34 reports on-hook E29 to the PSTN gateway 32. Then, as described in connection with the initial stage of the call setup sequence, the call agent 30 issues off-hook detection requests (Notification Request) E30 and E31 to the cable modem 10 and PSTN gateway 32 and instructs them to report an off-hook state. If the off-hook state is detected, the call setup process is started.

As described above, the cable modem 10 is equipped with the VoIP control unit 50 for executing VoIP-related protocol processes, and the ISDN terminal unit 52 that emulates the ISDN exchange interface (ISDN exchange function) for the ISDN telephone 12 and has the interface function with the VoIP control unit 50. Thereby, the ISDN telephone 12 is made applicable, and the VoIP services can be enjoyed using the currently prevalent ISDN telephones.

## Claims

1. A cable modem with a function of packetizing voice information and transmitting/receiving the packetized voice information, **characterized by** comprising:
an interface (52) for connection to an ISDN (Integrated Services Digital Network) telephone;
a connection control unit (52) which executes a connection control for the ISDN telephone connected via the interface; and
a VoIP control unit (50) which executes a VoIP-related protocol process for a voice call by the ISDN telephone that is connection-controlled by the connection control unit.

2. A cable modem according to claim 1, **characterized in that** the connection control unit (52) executes the connection control according to the same sequence (P1, P2) as a connection sequence (A1 to A16) by an ISDN exchange, for the ISDN telephone connected via the interface.

3. A cable modem according to claim 1, **characterized in that** the connection control unit (52) tells a connection request (B2) to the VoIP control unit in response to a call setup message (B1) from the ISDN telephone, and sends a connection message (B7) to the ISDN telephone upon receiving a connection completion notice from the VoIP control unit in response to the connection request.

4. A cable modem according to claim 1, **characterized in that** the connection control unit (52) tells a disconnection request (B11) to the VoIP control unit in response to a call disconnection message (B10) from the ISDN telephone, and sends a release message (B13) to the ISDN telephone upon receiving a disconnection completion notice (B12) from the VoIP control unit in response to the disconnection request.

5. A cable modem according to claim 1,
**characterized in that** the VoIP control unit (50) executes a connection process for connection to a counterpart of a voice call in accordance with a connection request (B2) from the connection control unit, and tells a connection completion (B6) to the connection control unit upon receiving from the counterpart of the voice call a notice that a call-enabled state has been reached.

6. A cable modem according to claim 1,
**characterized in that** the VoIP control unit (50) executes a disconnection process for connection from a counterpart of a voice call in accordance with a disconnection request (B11) from the connection control unit, and tells a disconnection completion (B12) to the connection control unit when disconnection has been effected from the counterpart of the voice call.

7. A cable modem according to claim 1,
**characterized in that** the connection control unit (52) sends a call setup message (C2) to the ISDN telephone in accordance with a connection request from the VoIP control unit, and tells a connection completion (C7) to the VoIP control unit upon receiving a connection message (C6) from the ISDN telephone in response to the call setup message.

8. A cable modem according to claim 1,
**characterized in that** the connection control unit (52) sends a call disconnection message (C11) to the ISDN telephone in accordance with a connection request (C10) from the VoIP control unit, and tells a disconnection completion (C13) to the VoIP control unit upon receiving a release message from the ISDN telephone in response to the call disconnection message (C12).

9. A cable modem according to claim 1, **characterized in that** the VoIP control unit executes (50) a connection process for connection to a counterpart of a voice call in accordance with a connection request from a counterpart of a voice call, and tells a connection completion to the connection control unit (52) upon receiving from the counterpart of the voice call a notice that a call-enabled state has been reached.

10. A cable modem according to claim 1, **characterized in that** the VoIP control unit (50) executes a disconnection process for connection from a counterpart of a voice call in accordance with a disconnection request from a counterpart of a voice call, and tells a disconnection completion to the connection control unit (52) when disconnection has been effected from the counterpart of the voice call.

11. A protocol conversion processing method for a cable modem with a function of packetizing voice information and transmitting/receiving the packetized voice information, **characterized by** comprising:
providing a connection control unit (52) which executes a connection control for an ISDN telephone connected via an interface for connection to the ISDN telephone, and a VoIP control unit (50) which executes a VoIP-related protocol process for a voice call by the ISDN telephone that is connection-controlled by the connection control unit;
telling a connection request (B2) through the connection control unit to the VoIP control unit in response to a call setup message (B1) from the ISDN telephone, and sending a connection message (B7) to the ISDN telephone upon receiving a connection completion notice (B6) from the VoIP control unit in response to the connection request; and
telling a disconnection request (B11) through the connection control unit to the VoIP control unit in response to a call disconnection message (B10) from the ISDN telephone, and sending a release message (B13) to the ISDN telephone upon receiving a disconnection completion notice (B12) from the VoIP control unit in response to the disconnection request.

12. A protocol conversion processing method for a cable modem with a function of packetizing voice information and transmitting/receiving the packetized voice information, **characterized by** comprising:
providing a connection control unit (52) which executes a connection control for an ISDN telephone connected via an interface for connection to the ISDN telephone, and a VoIP control unit (50) which executes a VoIP-related protocol process for a voice call by the ISDN telephone that is connection-controlled by the connection control unit;
sending a call setup message (C2) through the connection control unit to the ISDN telephone in accordance with a connection request (C1) from the VoIP control unit, and telling a connection completion (C7) to the VoIP control unit upon receiving a connection message (C6) from the ISDN telephone in response to the call setup message, and
sending a call disconnection message (C11) through the connection control unit to the ISDN telephone in accordance with a connection request (C10) from the VoIP control unit, and telling a disconnection completion (C13) to the VoIP control unit upon receiving a release message (C12) from the ISDN telephone in response to the call disconnection message.
